# EUROPÄISCHE PATENTANMELDUNG

(11) **EP 0 533 076 A1**
(43) Veröffentlichungstag der Anmeldung: **24.03.1993**
(21) Anmeldenummer: 92115624.6
(22) Anmeldetag: 12.09.1992
(51) Int. Cl.: F16C 23/04

(54) **Befestigung eines Kalottenlagers in einem Lagergehäuse**

(30) Priorität: 18.09.1991 DE 4130962
(71) Anmelder: ITT Automotive Europe GmbH, D-60488 Frankfurt am Main (DE)
(72) Erfinder: Kiehnle, Günther, W-7519 Eppingen (DE); Walther, Bernd, W-7120 Bietigheim-Bissingen (DE)

(57) **Zusammenfassung**

Die Erfindung betrifft eine Befestigung eines Kalottenlagers (15) in einem Lagergehäuse (14). Dieses besitzt eine Kalottenschale (37), in der das Kalottenlager (15) liegt, und eine Aufnahme für einen Ring (50), der innen eine dem Kalottenlager angepaßte Kugelschale (51) besitzt und auf einen aus der Kalottenschale (37) vorstehenden Abschnitt des Kalottenlagers (15) aufgedrückt ist. Mit einfachen Mitteln soll gewährleistet sein, daß das Kalottenlager (15) nicht locker, jedoch noch leicht einstellbar, angeordnet ist. Dazu ist der Ring (50) aus einem gummielastischen Material gefertigt und wird von einer am Lagergehäuse (14) befestigten Scheibe (25) ringsum niedergehalten.

## Beschreibung

Die Erfindung bezieht sich auf eine Befestigung eines Kalottenlagers in einem Lagergehäuse, das eine Kalottenschale, in der das Kalottenlager liegt, und eine Aufnahme für einen Ring aufweist, der innen eine dem Kalottenlager angepaßte Kugelschale besitzt und auf einen aus der Kalottenschale vorstehenden Abschnitt des Kalottenlagers aufgedrückt ist.

Eine derartige Befestigung eines Kalottenlagers wird bei einem elektrischen Antriebsaggregat benutzt, das aus der DE-OS 29 05 869 bekannt ist. Das elektrische Antriebsaggregat umfaßt eine Motorgehäuse und ein Getriebegehäuse, das mit einem Lagerschild an das Motorgehäuse angeflanscht ist. Das Kalottenlager ist in dem das Lagergehäuse bildenden Lagerschild untergebracht. Der Ring ist stabil aus einem Kunststoffmaterial gefertigt und wird in seiner Aufnahme durch Verstemmen des Lagerschilds gehalten. Bei einer solchen Konstruktion ist eine definierte Haltekraft des Rings gegenüber dem Kalottenlager nur schwer einzustellen. Es kann leicht passieren, daß der Ring zu fest eingedrückt ist, so daß die freie Einstellbarkeit des Kalottenlagers geschmälert und der Wirkungsgrad des Motors herabgesetzt ist. Es kann auch passieren, daß das Kalottenlager nur lose gehalten wird, so daß ein erhöhter Verschleiß und Geräusche entstehen können.

Der Erfindung liegt deshalb die Aufgabe zugrunde, die Art der Befestigung eines Kalottenlagers gemäß dem Oberbegriff des Anspruchs 1 so weiterzuentwickeln, daß das Kalottenlager ohne großen Aufwand fest und doch genügend leicht einstellbar am Lagergehäuse gehalten wird.

Diese Aufgabe wird in Verbindung mit den Merkmalen aus dem Obebegriff des Anspruchs 1 erfindungsgemäß dadurch gelöst, daß der Ring aus einem gummielastischen Material gefertigt ist und von einer am Lagergehäuse befestigten Scheibe ringsum niedergehalten wird. Bei einer solchen Konstruktion wirken sich Toleranzen in den Maßen des Lagergehäuses, der Kugelkalotte und des Rings wegen dessen federnden Eigenschaften nur in abgeschwächter Form in der Haltekraft des Rings gegenüber der Kugelkalotte aus. Ein zu fester oder zu lockerer Sitz des Kalottenlagers wird deshalb wirksam vermieden.

Vorteilhafte Ausgestaltungen einer erfindungsgemäßen Befestigung kann man den Unteransprüchen entnehmen.

Es ist denkbar, daß die Aufnahme für Ring höher ist als der Ring im entspannten Zustand und daß die Scheibe mit einem axial abgesetzten Kranz in die Aufnahme hineingreift und dort den Ring hält. Günstiger erscheint es jedoch, wenn gemäß Anspruch 2 der Ring im entspannten Zustand aus seiner Aufnahme herausragt und die Scheibe im Bereich der Aufnahme weitgehend eben ist. Auch dabei wird der Ring durch die Scheibe etwas zusammengepreßt und dadurch die gewünschte Haltekraft für das Kalottenlager erzeugt. Um die Bauhöhe in axialer Richtung gering zu halten, steht das Kalottenlager gemäß Anspruch 3 vorteilhafterweise über die von der Scheibe beaufschlagte Stirnseite des Rings vor. Insbesondere steht es bis zu der dem Ring abgewandten Seite der Scheibe vor, so daß die Dicke der Scheibe nicht zusätzlich zur Länge des Kalottenlagers in die axiale Ausdehnung der gesamten Anordnung eingeht.

Gemäß Anspruch 5 besitzt der Ring innen neben einem Abschnitt in Kugelschalenform einen zylindrischen Abschnitt, der sich benachbart zu der von der Scheibe beaufschlagten Stirnseite des Ringes befindet und der, axial gesehen, wesentlich kürzer als die Kugelschale ist. Dieser zylindrische Abschnitt ist vorgesehen, weil bei einer spitz zulaufenden Lippe die Gefahr besteht, daß bei der Herstellung des Rings die Form im Bereich einer solchen Lippe nicht voll mit Material ausgefüllt wird.

Zur Befestigung der Scheibe sind zweckmäßigerweise an das Lagergehäuse Nietzapfen angeformt, mit denen die Scheibe am Lagergehäuse vernietet ist. Man kann das Lagergehäuse an einem Motorgehäuse eines Elektromotors dadurch befestigen, daß man am Lagergehäuse eine Federscheibe mit federelastischen seitlichen Armen befestigt, die Verrastelemente am Motorgehäuse hintergreifen. Gemäß Anspruch 7 wird nun der Ring vorteilhafterweise von dieser Federscheibe niedergehalten, so daß kein zusätzliches Bauteil erforderlich ist.

Ein Ausführungsbeispiel einer erfindungsgemäßen Befestigung eines Kalottenlagers in einem Lagergehäuse ist in den Zeichnungen dargestellt. Anhand der Figuren dieser Zeichnungen wird die Erfindung nun näher erläutert.

Es zeigen:
- Figur 1: einen abgebrochenen Schnitt durch das Motor- und Getriebegehäuse eines Scheibenwischermotors,

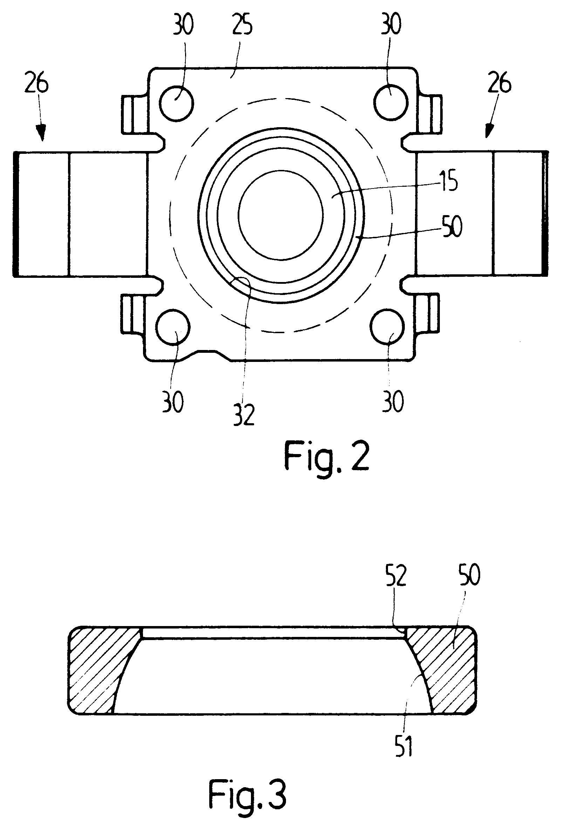

- Figur 2: eine Ansicht in Richtung des Pfeiles A aus Figur 1, jedoch ohne die Gehäuse,
- Figur 3: in vergrößertem Maßstab einen dem Schnitt nach Figur 1 entsprechenden Schnitt durch den gummielastischen Ring.

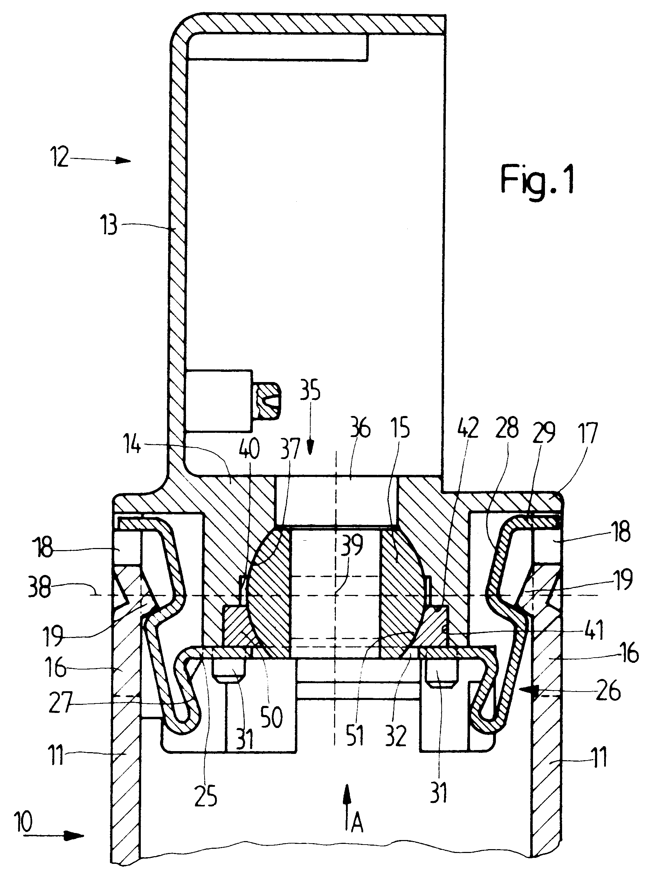

Das Motorgehäuse 10 des in Figur 1 teilweise gezeigten Scheibenwischermotors ist aus einem Blech gerollt und besitzt eine im wesentlichen zylindrische Form mit zwei sich einander diametral gegenüberliegenden Abflachungen 11, durch die der Schnitt nach Figur 1 senkrecht geht. An dem Motorgehäuse 10 ist ein Getriebegehäuse 12 befestigt, das einen Getriebetopf 13 und einen Lagerschild 14 aufweist, in dem ein Kalottenlager 15 angeordnet ist und der deshalb auch als Lagergehäuse bezeichnet werden kann.

Im Bereich jeder Abflachung 11 des Motorgehäuses 10 steht eine Lasche 16 axial über die übrige Stirnseite des Motorgehäuses 10 in Richtung auf den Lagerschild 15 vor und ist von einer Aussparung des Lagerschilds aufgenommen. Zwischen der Stirnseite jeder Lasche 16 und einem diese Stirnseite übergreifenden Kragen 17 des Lagerschilds 14 besteht ein Abstand, so daß dort eine öffnung 18 in das Innere des Motorgehäuses 10 vorhanden ist. Durch eine Einprägung von außen ist an jeder Lasche 16 ein nach innen vorspringender Rastnocken 19 entstanden.

Am Lagerschild 14 ist eine Federscheibe 25 befestigt, die aus einem Federstahlblech geformt ist. Die Federscheibe 25 hat im wesentlichen eine quadratische Form, wobei sie jedoch an zwei gegenüberliegenden Seitenkanten jeweils einen federnden Arm 26 aufweist, der mäanderförmig einen ersten von der Federscheibe 25 in Richtung vom Lagerschild 14 weg abgebogenen Schenkel 27 und einen daran anschließenden, in entgegengesetzter Richtung weisenden und längeren zweiten Schenkel 28 besitzt, der zum einen mit einer Abkröpfung den Rastnocken 19 an der entsprechenden Lasche 16 hintergreift und mit einem radial nach außen zeigenden Endabschnitt 29 in die jeweilige öffnung 18 hineinragt.

In jeder der vier Ecken der Federscheibe 25 befindet sich ein kleines, kreisrundes Loch 30. An den Lagerschild 14 sind einstückig vier Nietzapfen 31 angeformt, deren Lage zueinander der Lage der vier Löcher 30 zueinander entspricht, so daß beim Aufsetzen der Federscheibe 25 auf den Lagerschiid 14 die Nietzapfen 31 durch die Löcher 30 hindurchtreten können. Zentral besitzt die Federscheibe 25 ein großes, kreisrundes Loch 32, damit die in Figur 1 nicht dargestellte Motorwelle vom Motorgehäuse 10 in den Getriebetopf 13 hindurchtreten kann.

Selbstverständlich ist dazu auch ein zentraler Durchgang 35 im Lagerschild 14 notwendig. Dieser zentrale Durchgang 35 setzt sich dabei aus mehreren, axial hintereinander liegenden Abschnitten zusammen. Dem Getriebetopf 13 am nächsten ist zunächst ein erster zylindrischer Abschnitt 36 zu erkennen. Ihm folgt ein Abschnitt 37 in Form einer Kalottenschale, wobei diese im Querschnitt von der Größe des zylindrischen Abschnitts 36 ausgeht und sich mit zunehmender Entfernung vom Abschnitt 36 immer mehr erweitert. Schon im Abstand vor einer Mittelebene 38, auf der die Achse der Kalottenschale 37 senkrecht steht und auf der der Punkt 39 liegt, von dem alle Punkte auf der Kalottenschale 37 den gleichen Abstand haben, endet die Kalottenschale 37. Es schließt sich ein zweiter zylindrischer Abschnitt 40 an, der sich zu gleichen leilen beidseits der Mittelebene 38 befindet und dessen Durchmesser etwas größer als der Abstand der Kalottenschale 37 vom Punkt 39 ist. Ein dritter zylindrischer Abschnitt 41 folgt dem Abschnitt 40, wobei der Durchmesser des Abschnitts 41 größer als der des Abschnitts 40 ist und die beiden Abschnitte 40 und 41 in einer Schulter 42 ineinander übergehen. Der Abschnitt 41 ist von radial außen durch die Federscheibe 25 teilweise abgedeckt.

Das Kalottenlager 15 liegt in der Kalottenschale 37 und erstreckt sich axial von der Kante zwischen den beiden Abschnitten 36 und 37 des Durchgangs 35 bis zu der dem Abschnitt 41 abgewandten Seite der Federscheibe 25, wobei das zentrale Loch 32 in der Federscheibe 25 natürlich so groß ist, daß das Kalottenlager 15 hindurchtreten kann. Ein Ring 50, der aus einem gummielastischem Material hergestellt ist, ist in den Abschnitt 41 des Durchgangs 35 eingelegt und stützt sich an der Schulter 42 ab. Seine Außenkontur ist zylindrisch und sein Durchmesser entspricht dem Durchmesser des Abschnitts 41 des Durchgangs 35. Innen besitzt der gummielastische Ring eine Kugelschale 51, die an die Form des Kalottenlagers 15 angepaßt ist. Die Kugelschale 51 erstreckt sich jedoch nicht über die gesamte axiale Höhe des Rings 50. Vielmehr weist der Ring innen noch einen zylindrischen Abschnitt 52 auf, der sich benachbart zu der von der Federscheibe 25 beaufschlagten Stirnseite des Rings befindet und der, axial gesehen, wesentlich kürzer als die Kugelschale 51 ist. Im entspannten Zustand ist der Ring 50 axial etwas länger als der Abschnitt 41 des Durchgangs 35.

Während der Montage werden zunächst das Kalottenlager 15 in die Kalottenschale 37 und der gummielastische Ring 50 in den Abschnitt 41 des Durchgangs 35 eingelegt. Der elastische Ring 50 steht zunächst noch etwas über diesen Abschnitt 41 vor. Dann wird die Federscheibe 25 auf den Lagerschild 14 aufgesetzt, wobei die Nietzapfen 31 durch die Löcher 30 durchtreten. Beim Verformen der Nietzapfen 31 legt sich die Federscheibe 25 fest an den Lagerschild 14 an und drückt den Ring 50 ringsum diesen ohne Unterbrechung hinein. Die durch das Zusammendrücken des Rings 50 entstandene Klemmkraft genügt, um das Kalottenlager 15 leicht klemmend in der Kalottenschale 37 zu halten, wobei jedoch eine leicht Verstellbarkeit durch die Motorwelle noch gewährleistet ist.

## Patentansprüche

1. Befestigung eines Kalottenlagers (15) in einem Lagergehäuse (14), das eine Kalottenschale (37), in der das Kalottenlager (15) liegt, und eine Aufnahme (41) für einen Ring (50) aufweist, der innen eine dem Kalottenlager (15) angepaßte Kugelschale (51) besitzt und auf einen aus der Kalottenschale (37) vorstehenden Abschnitt des Kalottenlagers (15) aufgedrückt ist, dadurch gekennzeichnet, daß der Ring (50) aus einem gummielastischem Material gefertigt ist und von einer am Lagergehäuse (14) befestigten Scheibe (25) vorzugsweise ohne Unterbrechung ringsum niedergehalten wird.

2. Befestigung nach Anspruch 1, dadurch gekennzeichnet, daß der Ring (50) im entspannten Zustand aus seiner Aufnahme (41) herausragt und die Scheibe (25) im Bereich der Aufnahme (41) weitgehend eben ist.

3. Befestigung nach Anspruch 1 oder 2, dadurch gekennzeichnet, daß das Kalottenlager (15) über die von der Scheibe (25) beaufschlagte Stirnseite des Rings (50) vorsteht.

4. Befestigung nach Anspruch 3, dadurch gekennzeichnet, daß das Kalottenlager (15) bis zur dem Ring (50) abgewandten Seite der Scheibe (25) vorsteht.

5. Befestigung nach einem vorhergehenden Anspruch, dadurch gekennzeichnet, daß der Ring (50) innen einen zylindrischen Abschnitt (52) aufweist, der sich benachbart zu der von der Scheibe (25) beaufschlagten Stirnseite des Rings (50) befindet und der, axial gesehen, wesentlich kürzer als die Kugelschale (51) ist.

6. Befestigung nach einem vorhergehenden Anspruch, dadurch gekennzeichnet, daß an das Lagergehäuse (14) Nietzapfen (31) angeformt sind, mit denen die Scheibe (25) am Lagergehäuse (14) vernietet ist.

7. Befestigung nach einem vorhergehenden Anspruch, dadurch gekennzeichnet, daß das Lagergehäuse (14) mit Hilfe einer Federscheibe (25) mit federelastischen seitlichen Armen (26) an einem Motorgehäuse (10) eines Elektromotors befestigt ist und daß der Ring (50) von dieser Federscheibe (25) niedergehalten wird.
